# EUROPÄISCHE PATENTANMELDUNG

(11) **EP 4 494 739 A1**
(43) Veröffentlichungstag der Anmeldung: **22.01.2025**
(21) Anmeldenummer: 24188374.3
(22) Anmeldetag: 12.07.2024
(51) Int. Cl.: B01D 53/04, F25B 49/00

(54) **ABSCHEIDER FÜR KÄLTEMITTEL**

(30) Priorität: 17.07.2023 DE 102023118808
(71) Anmelder: Vaillant GmbH, 42859 Remscheid NRW (DE)
(72) Erfinder: Bausch, Thomas, 58313 Herdecke (DE)
(74) Vertreter: Popp, Carsten

(57) **Zusammenfassung**

Vorrichtung zur Abscheidung von leckagebedingt ausgetretenem Kältemitteldampf aus einem Kältekreisgehäuse (6), die Vorrichtung aufweisend einen Kältekreis (1) mit mindestens einem Verdichter (2), mindestens einem Entspannungsventil (4) und mindestens zwei Wärmeübertragern (3, 5) für Kältemittel mit Anschlüssen an Wärmeübertragerfluide, der Kältekreis (1) gefüllt mit kohlenwasserstoffhaltigem Kältemittel, dessen Atomdurchmesser über 3,7 Ängström beträgt, ein geschlossenes Kältekreisgehäuse (6), welches alles kältemittelführenden Einrichtungen dicht umschließt, einen zum Gehäuseinneren und zum Gehäuseäußeren verschließbaren Adsorber (12) mit Adsorptionsmittel, welches geeignet ist, das kohlenwasserstoffhaltige Kältemittel adsorptiv zu binden, wobei der Adsorber (12) zur Aufstellungsumgebung hin durch eine Membran (17) verschlossen wird, die für das kohlenstoffhaltige Kältemittel unpassierbar, jedoch für Luftbestandteile durchlässig ist, ferner Verfahren zum Abscheiden und Sammeln des Kältemittels.

## Beschreibung

Die Erfindung betrifft die Abscheidung von leckagebedingt aus einem Kältekreis ausgetretenem Kältemittel. Dies geschieht mittels einer Vorrichtung, die entweder innerhalb eines druckdichten Gehäuses, in welchem der geschlossene Kältekreis mit allen Kältemittel führenden Einrichtungen umschlossen ist, oder außerhalb des Gehäuses angeordnet ist.

Seit kurzem sollen in Wärmepumpen und Klimaanlagen natürliche Kältemittel verwendet werden, die brennbar oder giftig oder gefährlich sind. Dies sind beispielsweise Kohlenwasserstoffe wie R290, R600a und R1270 und anorganische Stoffe wie R717 und R744. Wenn diese Kältemittel in Geräten verwendet werden, die innen aufgestellt werden sollen, dürfen entweder nur Kleinmengen zum Einsatz kommen oder es müssen aufwändige Sicherheitskonzepte vorgesehen werden, damit auch im Leckagefall keine großen Gefahren für Bewohner entstehen können.

Um zu verhindern, dass Kältemittel im Fall einer Leckage aus dem Kältekreisgehäuse entkommt, können Adsorber mit Adsorptionsmitteln verwendet werden, welche das ausgetretene Kältemittel binden, oder es werden Membranen verwendet, die zwar luftdurchlässig, aber nicht durchlässig für Kältemittel sind. Beides wird nachfolgend anhand des Kältemittels R290 sowie des Adsorptionsmittels Aktivkohle beispielhaft näher erläutert, wobei das aber auch für andere organische Kältemittel und Adsorptionsmittel analog gilt.

Gasförmiges R290, welches aus Propan besteht, kann gut von Luftbestandteilen durch eine Membran getrennt werden. Die DE 600 32 610 T2 beschreibt ein Verfahren zur Herstellung einer solchen Membran und zeigt in Beispiel 5, Abschnitt [0051] auf Seite 33, wie mittels einer solchen Membran eine Gewinnung von Propan zu erreichen ist. Dies liegt unter anderem daran, dass die Arbeitsdurchmesser der leichten Gase wie Sauerstoff, Stickstoff, Wasserdampf und Kohlendioxid kleiner als die von Propan sind.

Die EP 3 882 526 B1 beschreibt ein Abscheideverfahren, welches im Heizkreis einer Wärmepumpe betrieben wird, deren Arbeitsfluid wie hier aus kohlenstoffhaltigen Verbindungen besteht, und deren Arbeitsdruck höher als der des Heizkreises ist. Hierbei wird vorgesehen, dass das Heizkreiswasser in einer Kontaktzone mit einem Extraktionsmittel zusammengebracht wird, welches gebildet ist aus der Gruppe enthaltend Kohlenwasserstoffen, Fetten, Ketonen, Aldehyden, Kohlenwasserstoffsäuren, Alkoholen, Fettsäuren, Aromaten, deren halogenierte oder teilhalogenierte Derivate, Öl oder einer sonstigen Flüssigkeit mit großem unpolaren Anteil, welche zwischen 5 und 85 Grad Celsius flüssig ist, wobei in Heizkreiswasser gelöste oder feinblasige kohlenstoffhaltige Verbindungen in dem Extraktionsmittel in Lösung gehen, und das Extraktionsmittel in einer weiteren Kontaktzone mit einem Gas in Kontakt gebracht wird, welches unter dem gleichen Druck wie der Heizkreis gehalten wird, und dieses Gas regelmäßig abgezogen wird.

Dazu dient eine Abscheidevorrichtung, welche im Heizkreis einer Wärmepumpe installiert ist, deren Arbeitsfluid wie hier aus kohlenstoffhaltigen Verbindungen besteht, dabei aufweisend einen Behälter mit einem Einströmbereich und einem Ausströmbereich für das Heizkreiswasser im unteren Teil des Behälters, wobei dieser Behälter durch ein flüssigkeitsdurchlässiges Sieb vom durchströmten unteren Teil abgetrennt ist, und wobei oberhalb des Siebes ein Freiraum vorgesehen ist, in dem sich Heizkreiswasser ansammeln kann, darüber ein Freiraum angeordnet ist, in dem sich eine aufschwimmende, aus einem Extraktionsmittel gebildete Trennschicht befindet und darüber ein Schwimmerkörper angeordnet ist, und der Behälter darüber über einen Gasabzug mit einer Druckhaltung verfügt.

Eine solche Trennschicht mit einem Extraktionsmittel sieht die vorliegende Erfindung nicht vor. Die betreffenden Kohlenwasserstoffe des Kältemittels sollen stattdessen zurückgehalten werden und nicht extrahiert werden.

Bekanntlich betragen die Arbeitsdurchmesser von Sauerstoff 3,46 Angström, von Stickstoff 3,64 Angström, von Kohlendioxid 3,3 Angström, von Methan 3,8 Angström und von Propan 4,3 Angström. Andere entzündliche Bestandteile von R290, R600a oder R1270 weisen also immer Molekülgrößen von mehr als 3,7 Angström auf und daher hält ein poröser Film mit einem Arbeitsdurchmesser von 3,7 Angström Methan, Ethan, Propan, Isobutan und Butan zurück, während die anderen Luftkomponenten Wasserdampf, Sauerstoff und Stickstoff durchgelassen werden. Mit einer Porengröße von 4 Angström kann der poröse Film für Sauerstoff und Stickstoff durchlässig, für Propan aber undurchlässig gestaltet werden, mit einer Porengröße von 4 Angström würde Propan, also R290, zurückgehalten werden können.

Es kommen zwei verschiedene Membranarten für die Gastrennung in der Rückhaltemembran alternativ oder kombiniert zur Anwendung. Dies sind einerseits semipermeable Wände und andererseits größenselektive Membranen. Bei semipermeablen Wänden löst sich das Gas in der festen Wand und diffundiert durch sie hindurch. Gase, die sich nicht lösen, diffundieren nicht. Je nach Kältemittel wählt man hierfür eine semipermeable Wand, in der sich Kohlenwasserstoffe nicht lösen können, im Gegensatz zu Sauerstoff und Stickstoff.

Bei größenselektiven Membranen, die üblicherweise aus dünnen Filmen aufgebaut sind, kommt es auf die Durchmesser an. Eine selektive Rückhaltung von Kohlenwasserstoffen wie Propan ist möglich, wenn der Porendurchmesser der Rückhaltemembran größer als 3,64 Angström dimensioniert wird.

Handelt es sich bei den entzündlichen Bestandteilen nicht um Methan oder Ethan, sondern um Propan und/oder Butan, kann auch eine Porenverteilung verwendet werden, deren größte Poren kleiner als 4,3 Angström sind. Eine solche Membran mit einer Porenverteilung von 3,5 bis 4,3 Angström ist fertigungstechnisch günstiger herzustellen, als eine mit einer engen Verteilung.

Größenselektive Membranen sind empfindlich gegen mechanischen Druck und gegen Verschmutzung. Aus diesem Grund können auch beide Membranformen kombiniert werden, wobei die semipermeable Wand aus einem stabilen Material, welches unlöslich für die Kältemittelmoleküle ist, und mit größerer Wandstärke gewählt wird und die größenselektive Membran darauf aufgebracht wird. Die semipermeable Membran bildet dann das Stützgerüst für die größenselektive Membran.

Um sie vor Verschmutzung zu schützen, muss diese durch einen vorgeschalteten Feinfilter, etwa einen HEPA-Filter abgesichert werden. Allerdings hat die Zurückhaltung des Kältemittelkohlenwasserstoffs bei gleichzeitiger Durchlässigkeit von Luft einen Konzentrationsanstieg vor der Membran zur Folge und es ist schwierig sicherzustellen, dass niemals ein entzündliches Gemisch entstehen kann. Und falls das entstehende Gemisch im zeitlichen Verlauf der Leckage zu einem überfetteten, nicht mehr zündfähigen Gemisch im Kältekreisgehäuse führt, kann nicht sichergestellt werden, dass kein so hoher Druck im Gehäuse auftritt, der es undicht werden lässt, und beim Öffnen kann unmittelbar durch Luftzutritt aus dem Aufstellungsraum ein zündfähiges Gemisch entstehen. Das muss unbedingt verhindert werden. Das bloße Zurückhalten von Kältemitteldampf im Kältekreisgehäuse mittels Membrantechnik ist also insgesamt nicht zielführend.

Bei Adsorptionsmitteln stellt sich das Problem, dass Kohlenwasserstoffe auf üblichen und günstigen Adsorptionsmitteln wie Aktivkohle nur schlecht adsorbiert werden, wobei sich aber herausgestellt hat, dass das Adsorptionsvermögen bei hohen Partialdrücken erheblich ansteigt, weil sich dann mehrlagige Schichten auf dem Adsorptionsmittel bilden. Wenn man leckagebedingt ausgetretene Kleinmengen an R290 beispielsweise auf Aktivkohle abscheiden will, ergibt sich eine flache Durchbruchskurve mit einer sehr breiten MTZ (mass transfer zone) und es wird über die Adsorberlänge nicht viel abgeschieden, bevor ein Durchbruch zu beobachten ist. Es fehlt dann am Gegen-Partialdruck.

Wenn man dagegen bei einer seltenen großen Leckage viel Kältemittel bei relativ hohen Partialdrücken abscheiden will, steigt zwar die Beladungskapazität stark an, allerdings führt die Adsorption dann auch zu starker Erwärmung, was wiederum zur Desorption bereits abgeschiedenen Kältemittels im Verlauf des Strömungsweges führt, da physikalische Adsorption stets temperaturabhängig ist. Das ist besonders fatal, wenn eine Leckage klein beginnt, dann anwächst und schließlich zu einer großen Leckage wird. Dann kann ein plötzlicher Durchschlag durch das Adsorptionsbett auftreten, obwohl die nominelle Beladungskapazität durchaus ausreichend dimensioniert wäre. Die Adsorptionswärme treibt dann eine Desorptionswelle vor sich her. Das kann man vermeiden, indem man sicherheitshalber mehr Adsorptionsmittel vorsieht, als unbedingt nötig.

Die Aufgabe der Erfindung ist daher, eine Vorrichtung und ein Verfahren zur Verfügung zu stellen, welches das beschriebene Dilemma löst und leckagebedingt ausgetretenes Kältemittel sicher abscheidet und speichert, ohne dass ein zündfähiges Gemisch entsteht und ohne dass Kältemittel in den Aufstellungsraum austreten kann. Die Aufgabe wird durch Kombination von Adsorption und Membrantrennung gelöst.

Die Erfindung löst die Aufgabe durch eine Vorrichtung zur Abscheidung von leckagebedingt ausgetretenem Kältemitteldampf aus einem Kältekreisgehäuse, die Vorrichtung aufweisend
- einen Kältekreis mit mindestens einem Verdichter, mindestens einem Entspannungsventil und mindestens zwei Wärmeübertragern für Kältemittel mit Anschlüssen an Wärmeübertragerfluide,
- der Kältekreis gefüllt mit kohlenwasserstoffhaltigem Kältemittel, dessen Atomdurchmesser über 3,7 Angström beträgt,
- ein geschlossenes Kältekreisgehäuse, welches alles kältemittelführenden Einrichtungen dicht umschließt,
- einen zum Gehäuseinneren und zum Gehäuseäußeren verschließbaren Adsorber mit Adsorptionsmittel, welches geeignet ist, das kohlenwasserstoffhaltige Kältemittel adsorptiv zu binden,
- der Adsorber zur Aufstellungsumgebung hin durch eine Membran verschlossen wird, die für das kohlenstoffhaltige Kältemittel unpassierbar, jedoch für Luftbestandteile durchlässig ist.

Ausgestaltungen betreffen die Adsorptionsmittel, mit denen der Effekt erreicht wird. So wird in Varianten vorgesehen, dass es sich bei den Adsorptionsmitteln um Aktivkohleschüttungen, mit Aktivkohle beschichtete Wabenkörper oder beschichtete strukturierte Packungen, um Formkörper aus Aktivkohle oder um mit Aktivkohle belegte Polyurethanschaumstoffe oder offenporige Fliese handelt. Als Adsorptionsmittel sowohl für Schüttungen als auch für belegte Fliese und Schaumstoffe eignen sich Aktivkohle und auf Vinylidenchloridpolymer basierende Kohlenstoffmolekularsieb-Adsorber-Zusammensetzungen, wie sie beispielsweise in der EP 3 160 639 B1 beschrieben sind.

Die DE 10 2011 116 863 A1 beschreibt weiterhin als geeignete Adsorptionsmittel Zeolith, auch in Kombination mit Imidazol oder Phosphaten, ferner CuBTC. Die Trägerstruktur des Formkörpers kann aus Mikrostruktur, Lamellenstruktur, Rohrbündel, Rohrregister und Blech bestehen und muss mechanisch stabil sowie stark oberflächenvergrößernd sein.

Dabei können auch verschiedene Schichten solcher Adsorptionsmittel übereinander angeordnet werden. Ziele solcher Anordnungen sind die Einschränkung von Randgängigkeit, wie sie in losen Schüttungen die Regel ist, sowie die Staubbildung sich reibender Partikel des Adsorptionsmittels und die Wärmeleitung.

Um auch Feinstaub abzuscheiden, kann in einer Ausgestaltung zwischen dem Adsorber und der Membran ein Feinstaubfilter vorgesehen werden, vorzugsweise ein HEPA-Filter. Damit wird verhindert, dass die Membran verstopft wird.

Weitere Ausgestaltungen betreffen die Membran. Hierbei ist vorgesehen, dass eine semipermeable Membran verwendet wird, welche kein Lösungsvermögen für kohlenwasserstoffhaltige Kältemittel aufweist, jedoch übrige Luftbestandteile gut löst. In einer Ausgestaltung ist vorgesehen, dass eine größenselektive Membran mit einem Porendurchmesser von 3,7 bis 4,3 Angström verwendet wird. In einer weiteren Ausgestaltung ist vorgesehen, dass eine Kompositmembran mit einer größenselektiven Membran mit einem Porendurchmesser von 3,7 bis 4,3 Angström und einer semipermeablen Membran verwendet wird, welche kein Lösungsvermögen für kohlenwasserstoffhaltige Kältemittel aufweist, jedoch übrige Luftbestandteile gut löst. Alle Ausführungsvarianten sind auf das verwendete Kältemittel abzustimmen.

Eine weitere Ausgestaltung betrifft ein Ventil mit einem Ablass zwischen Adsorber und Membran. Daran kann zu Wartungszwecken ein Auffanggefäß oder eine Abluftleitung ins Freie angeschlossen werden, wenn sich im Leckagefall im Zwischenraum zwischen Adsorber und Membran Kältemitteldampf angesammelt hat.

Adsorber und Membran können als Einheit innerhalb oder außerhalb des Kältekreisgehäuses in Form einer Kartusche angeordnet sein. Eine Anordnung außerhalb des Kältekreises hat im Wartungs-oder Schadensfall den Vorteil, dass ein beladenes Modul unkompliziert durch ein unbeladenes Modul ausgetauscht werden kann. Dadurch ist es möglich, das Kältekreisgehäuse, welches in einem solchen Fall eine Leckage aufweist, durch Spülen mit Inertgas, beispielsweise Stickstoff, soweit zu spülen, dass ein Öffnen und eine Reparatur des Kältekreises auf ungefährliche Weise möglich werden.

Die Erfindung löst die Aufgabe auch durch ein Verfahren. Hierbei wird leckagebedingt ausgetretenes Kältemittel zunächst durch Aktivkohle auf einer Adsorptionsstrecke adsorbiert, nach Erreichen des Endes der Adsorptionsstrecke von Feinstaub befreit, danach durch eine Membran zurückgehalten und in einem Raum zwischen dem Adsorberaustritt und der Membran angereichert wird. Durch die Anreicherung erfolgt eine Konzentrationserhöhung mit einem Partialdruckanstieg des Kältemittels, der auf das Adsorptionsmittel im Adsorber zurückwirkt und die Adsorptionswirkung erhöht. Mittels eines Ventils kann das Kältemittel dann abgelassen und als überfettetes Kältemittel-Luftgemisch sicher aufgefangen oder abgeleitet werden.

Als Kältekreisgehäuse sind dabei alle Gehäuseteile anzusehen, in denen Vorrichtungen angeordnet sind, die Kältemittel führen oder im Leckagefall führen könnten. So können die Wärmeübertrager separate Gehäuse haben, ebenso die Steuerungselektronik mit ihrer Kühlung, ebenso kann sich der gesamte Kältekreis in einem Gehäuse befinden, es können Gehäuse getrennt von Belüftungsvorrichtungen oder auch Gehäuse, die mit Außeneinheiten verbunden sind, oder Gehäuse, die ineinander verschachtelt sind, Kältekreisgehäuse im Sinne dieser Erfindung sein.

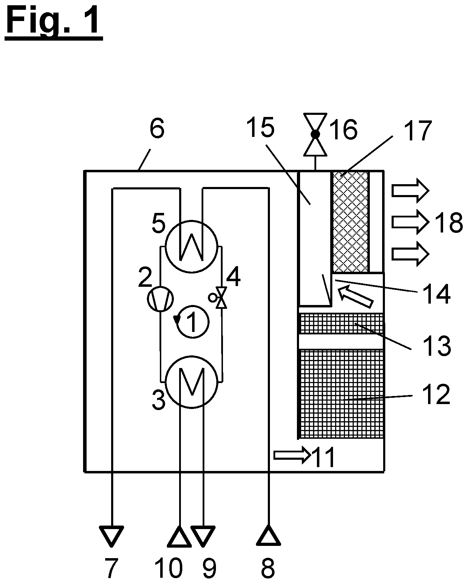

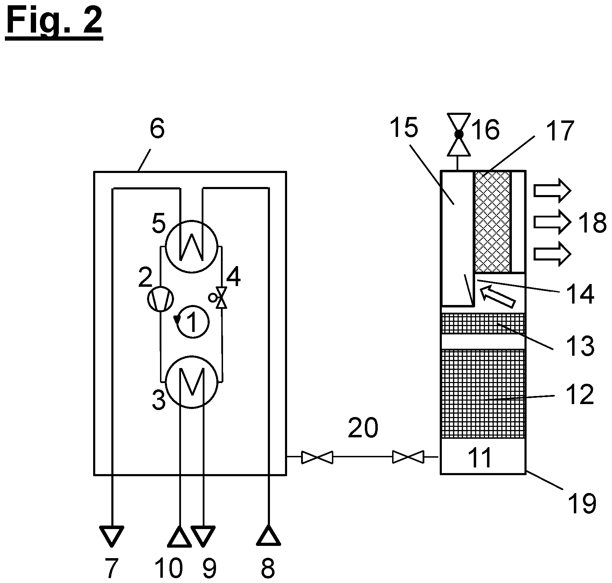

Die Erfindung wird anhand von Fig. 1 und Fig. 2 näher erläutert. Es zeigen
- Fig. 1: eine schematische Darstellung eines Kältekreisgehäuses mit interner Kältemitteldampfabscheidung,
- Fig. 2: eine schematische Darstellung eines Kältekreisgehäuses mit externer Kältemitteldampfabscheidung mittels einer Kartusche.

Fig. 1 zeigt eine schematische Darstellung eines Wärmepumpengehäuses mit der erfindungsgemäßen Kältemitteldampfabscheidung. Der Kältekreis 1 wird gebildet vom Verdichter 2, dem Kondensator 3, dem Entspannungsventil 4 und dem Verdampfer 5, die alle von Kältemittel durchströmt werden. An den Kondensator 3 angeschlossen sind ein Solekreis als Wärmequelle mit dem Wärmequellenvorlauf 8 und dem Wärmequellenrücklauf 7. An den Verdampfer 5 angeschlossen sind ein Heizkreis als Wärmesenke mit dem Wärmesenkenvorlauf 10 und dem Wärmesenkenrücklauf 9.

Im Falle einer Leckage im Kältekreis 1 ergibt sich im Kältekreisgehäuse 6 ein Kältemittel-Luftgemisch, wobei der Innendruck im Kältekreisgehäuse 1 ansteigt. Dieser Druckanstieg treibt das Kältemittel-Luftgemisch in den Eingang 11 des Adsorbers 12 und von da aus in den Adsorber 12 mit Adsorptionsmittel. Dort wird das Kältemittel adsorptiv gebunden, im Falle von R290 wird beispielsweise Aktivkohle verwendet. Das Adsorptionsmittel kann dabei ein Festbett oder ein mit Aktivkohle beschichteter poröser Schaumstoff oder eine Wabenkeramik sein.

Die restliche Strömung, die überwiegend aus Luft besteht, wird im Feinstaubfilter 13 von Feinstaub befreit und verlässt den Feinstaubfilter 13 staubfrei in die Beruhigungsstrecke 14, und nachfolgend zum Vorraum 15, wobei die beiden Räume durch eine Rückstromsperre gesichert sind. Vom Vorraum 15 aus wird die Kompositmembran 17 angeströmt, die für Luftmoleküle durchlässig ist, für Moleküle des Kältemitteldampfes jedoch nicht. Die Luft kann dabei aus dem Luftauslass 18 in den Aufstellungsraum entweichen. Falls sich größere Mengen an Kältemitteldampf im Vorraum 15 ansammeln sollten, kann mittels eines normalerweise geschlossenen Ventils 16 ein Ablassen dieses Kältemitteldampfs über einen Schlauch ins Freie oder in eine Kältefalle erfolgen.

Fig. 2 zeigt eine analoge Anordnung, bei der der Adsorber 12 und die Kompositmembran 17 in einer Kartusche 19 angeordnet sind. Der Eingang 11 in den Adsorber 12 wird über ein Doppelabsperrventil 20 angeströmt. Im Leckagefall kann die beladene Kartusche 19 durch eine unbeladene Kartusche so oft ausgetauscht werden, bis das Innere des Kältekreisgehäuses 6 praktisch frei von Kältemitteldampf ist und geöffnet und der Kältekreis repariert werden kann.

### Bezugszeichenliste

- 1: Kältekreis
- 2: Verdichter
- 3: Kondensator
- 4: Entspannungsventil
- 5: Verdampfer
- 6: Kältekreisgehäuse
- 7: Wärmequellenrücklauf
- 8: Wärmequellenvorlauf
- 9: Wärmesenkenrücklauf
- 10: Wärmesenkenvorlauf
- 11: Eingang Adsorber
- 12: Adsorber mit Adsorptionsmittel
- 13: Feinstaubfilter
- 14: Beruhigungsstrecke
- 15: Vorraum
- 16: Ventil
- 17: Kompositmembran
- 18: Luftauslass
- 19: Kartusche
- 20: Doppelabsperrventil

## Patentansprüche

1. Vorrichtung zur Abscheidung von leckagebedingt ausgetretenem Kältemitteldampf aus einem Kältekreisgehäuse (6), die Vorrichtung aufweisend
- einen Kältekreis (1) mit mindestens einem Verdichter (2), mindestens einem Entspannungsventil (3) und mindestens zwei Wärmeübertragern (3, 5) für Kältemittel mit Anschlüssen an Wärmeübertragerfluide (7, 8, 9, 10),
- der Kältekreis (1) gefüllt mit kohlenwasserstoffhaltigem Kältemittel, dessen Atomdurchmesser über 3,7 Angström beträgt,
- ein geschlossenes Kältekreisgehäuse (6), welches alles kältemittelführenden Einrichtungen dicht umschließt,
- einen zum Gehäuseinneren und zum Gehäuseäußeren verschließbaren Adsorber (12) mit Adsorptionsmittel, welches geeignet ist, das kohlenwasserstoffhaltige Kältemittel adsorptiv zu binden,
**dadurch gekennzeichnet, dass**
- der Adsorber (12) zur Aufstellungsumgebung hin durch eine Membran (17) verschlossen wird, die für das kohlenstoffhaltige Kältemittel unpassierbar, jedoch für Luftbestandteile durchlässig ist.

2. Vorrichtung nach Anspruch 1, **dadurch gekennzeichnet, dass** als Adsorptionsmittel Aktivkohle in Form von
- Schüttungen,
- beschichteten Wabenkörpern,
- beschichteten strukturierten Packungen,
- Formkörpern,
- belegten Polyurethanschaumstoffen,
- offenporigem Flies
einzeln oder übereinander eingesetzt wird.

3. Vorrichtung nach einem der Ansprüche 1 oder 2, **dadurch gekennzeichnet, dass** zwischen dem Adsorber (12) und der Membran (17) ein Feinstaubfilter (13) vorgesehen wird.

4. Vorrichtung nach einem der Ansprüche 1 bis 3, **dadurch gekennzeichnet, dass** eine semipermeable Membran (17) verwendet wird, welche kein Lösungsvermögen für kohlenwasserstoffhaltige Kältemittel aufweist, jedoch übrige Luftbestandteile gut löst.

5. Vorrichtung nach einem der Ansprüche 1 bis 3, **dadurch gekennzeichnet, dass** eine größenselektive Membran (17) mit einem Porendurchmesser von 3,7 bis 4,3 Angström verwendet wird.

6. Vorrichtung nach einem der Ansprüche 4 oder 5, **dadurch gekennzeichnet, dass** eine Kompositmembran (17) mit einer größenselektiven Membran mit einem Porendurchmesser von 3,7 bis 4,3 Angström und einer semipermeablen Membran verwendet wird.

7. Vorrichtung nach einem der Ansprüche 1 bis 6, **dadurch gekennzeichnet, dass** ein Ventil (16) mit einem Ablass zwischen Adsorber (12) und Membran (17) vorgesehen wird.

8. Vorrichtung nach einem der Ansprüche 1 bis 7, **dadurch gekennzeichnet, dass** Adsorber (12) und Membran (17) als Einheit außerhalb des Kältekreisgehäuses (6) in Form einer Kartusche (19) angeordnet sind.

9. Verfahren zum Abscheiden und Auffangen von leckagebedingt aus einem Kältekreis (1) in ein geschlossenes Kältekreisgehäuse (6) ausgetretenem Kältemittel mittel Vorrichtungen entsprechend den Ansprüchen 1 bis 8, **dadurch gekennzeichnet, dass**
- das Kältemittel zunächst durch Aktivkohle auf einer Adsorptionsstrecke in einem Adsorber adsorbiert wird,
- nach Erreichen des Endes der Adsorptionsstrecke im Adsorber von Feinstaub befreit wird,
- danach durch eine Membran zurückgehalten wird,
- und in einem Raum (15) zwischen dem Adsorberaustritt und der Membran (17) unter Konzentrationserhöhung angereichert und gesammelt wird.

10. Verfahren nach Anspruch 9, **dadurch gekennzeichnet, dass** das im Raum zwischen dem Adsorberaustritt und der Membran angereicherte und gesammelte Kältemittel durch ein Ventil (16) abgelassen und einer sicheren Entsorgung oder einer weiteren Verwendung zugeführt wird.
